# EUROPEAN PATENT SPECIFICATION

(11) **EP 2 247 082 B1**
(45) Date of publication and mention of the grant of the patent: **20.11.2013**
(21) Application number: 09006033.6
(22) Date of filing: 30.04.2009
(51) Int. Cl.: H04M 1/247, H04M 1/60, H04M 3/22

(54) **Telecommunication device, telecommunication system and method for telecommunicating voice signals**
Telekommunikationsvorrichtung, Telekommunikationssystem und Verfahren zur Telekommunikation von Stimmsignalen
Dispositif de télécommunication, système de télécommunication et procédé de télécommunication de signaux vocaux

(43) Date of publication of application: 03.11.2010
(73) Proprietor: Fraunhofer-Gesellschaft zur Förderung der angewandten Forschung e.V., 80686 München (DE)
(72) Inventor: Appell, Jens Ekkehart, 26203 Wardenberg (DE); Rennies, Jan, 26121 Oldenburg (DE)
(74) Representative: Zinkler, Franz

(56) References cited:
- EP-A2- 1 672 898
- WO-A1-2009/014938
- US-A1- 2008 101 557
- US-A1- 2008 228 473

## Description

Embodiments of the invention relate to a telecommunication device for communicating with a communication partner, like a telephone or a mobile phone, to a telecommunication system and to a method for telecommunicating with a communication partner. The technical field of the invention is related to the fields of speech intelligibility and audio quality in telecommunication technologies.

A problem of today's telecommunication systems is that a transmitter or a speaker does not receive any feedback as to how well the voice signals at the receiver's side are understandable for the listener. Nowadays this problem is practically only solved by an intervention or comment of the listener, interrupting the communication and pointing out the problem of a bad acoustic transmission to the speaker. This means that, the listener has to ask, for example, the speaker to speak more clearly, to go to a quieter place, with less environmental noise or to position the microphone of the telecommunication device in a better manner. Due to this, a listener might be considered as a person who is hard of hearing and, furthermore, the communication between a speaker and a listener or between a transmitter and a receiver, is disturbed and, therefore, should be avoided. During a video conference, for example, one group of people on the transmitter side and another group of people on the receiver side may be disturbed or it may be considered as disturbing, if people have to ask their counterparts to speak up or to speak more clearly in order to follow a discussion between both groups. So far, signal processing and technical measures, for example, directional microphones and/or environmental microphones are used to correct unintelligibile voice signals and to achieve therewith improved speech intelligibility at the receiver side. But such telecommunication systems may be expensive, sometimes hard to handle for a user or even incapable of handling a given situation during a telecommunication call.

The patent application WO 2009/014938 A1 discloses an automated distortion detection for voice communication systems. A feedback information is determined if a voice quality is considered degraded, wherein the feedback information is outputted to a user at an end point of the communication system. Based on the feedback information the voice quality can be improved by the user.

Therefore it is desirable to facilitate high speech intelligibility during a phone call or a telecommunication conference with fewer costs and with objective technical means, which are easy to handle for a user.

There is a need for enabling a high speech intelligibility and/or a high audio quality during a telecommunication of voice signals in a manner that is easy to handle for a user and which is related to a direct and objective estimation of the speech intelligibility or audio quality of a telecommunication at the receiver side.

This technical problem is solved by embodiments of the invention providing a telecommunication device for communicating with a communication partner according to claims 1, 8 and by the method for telecommunicating voice signals to a communication partner according to claim 12.

According to embodiments of the invention, a telecommunication device comprises input means for outbound voice signals, means for receiving or determining information about the intelligibility or audio quality and output means for presenting this information to a user.

With reference to the accompanying Figs. 1a to 4, embodiments of a telecommunication device, a telecommunication system and a method for telecommunicating a voice signal to a communication partner will be described.
- Fig. 1a: shows a schematic block diagram of a telecommunication device according to an embodiment of the invention.
- Fig. 1b: shows a schematic block diagram of a telecommunication device according to another embodiment of the invention
- Fig. 1c: shows a schematic block diagram of a telecommunication device according to another embodiment of the invention.
- Fig. 2: shows a schematic block diagram of a telecommunication device for communicating with a plurality of communication partners according to another embodiment of the invention.
- Fig. 3a: shows a schematic block diagram of a telecommunication system according to an embodiment.
- Fig. 3b: shows another schematic block diagram of a telecommunication system comprising a first telecommunication device and a second telecommunication device according to another embodiment of the invention.
- Fig. 3c: shows another schematic block diagram of a telecommunication system, wherein the telecommunication is performed in a bidirectional manner.
- Fig. 4: shows a flow chart of the method for telecommunicating a voice signal to a communication partner according to some embodiments.

With reference to the following description of the embodiments of the present invention, it is to be noted that for simplification reasons, the same reference numerals will be used in the different figures for functionally identical or similarly acting or functionally equal or equivalent elements or steps throughout the description.

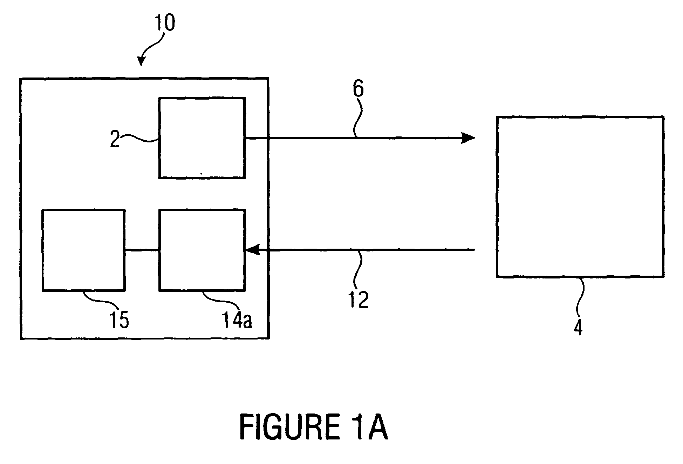

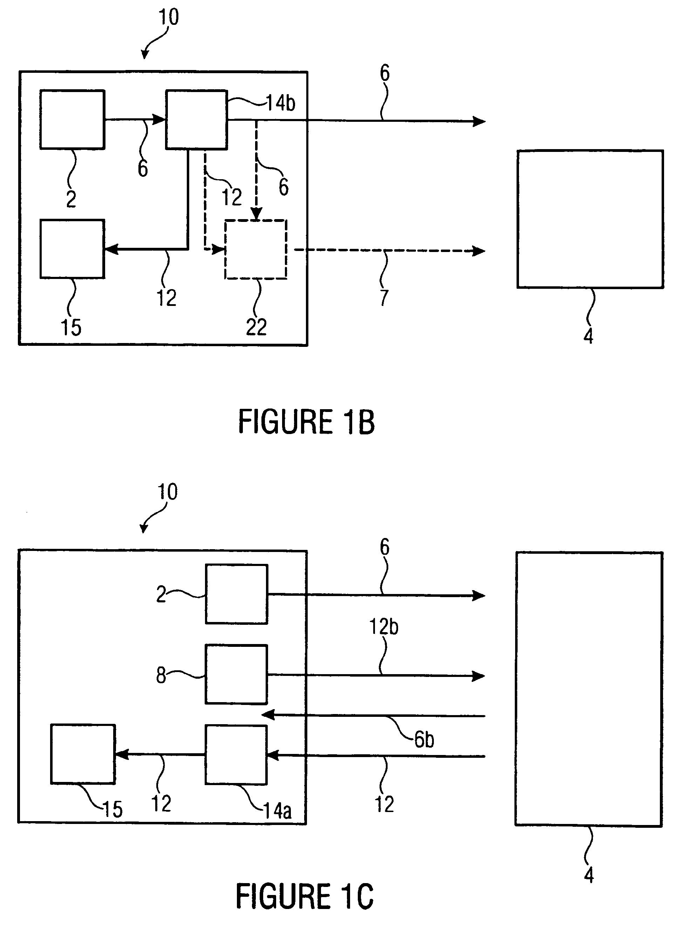

In Fig. 1a, a schematic block diagram of a telecommunication device 10 for communicating with a communication partner 4 is depicted. The telecommunication device 10 comprises input means 2 for outbound voice signals 6 and means for receiving 14a information 12 indicating intelligibility or an audio quality of the outbound voice signals received by the communication partner 4. In Fig. 1b the telecommunication device 10 comprises means for determining 14b information 12 indicating intelligibility or an audio quality of the outbound voice signals 6. In Fig. 1a and 1b, the telecommunication device 10 comprises output means 15 for presenting the information 12 to a user of the telecommunication device 10. The output means 15 may be coupled to the means for receiving 14a or for determining 14b information 12 indicating intelligibility or an audio quality of the outbound voice signals.

According to some embodiments, the telecommunication device 10 is configured to receive or to determine at the transmitter side, i.e. at the side of the input means 2 for outbound voice signals 6, information 12 concerning the speech intelligibility or audio quality at the receiver side, i.e. at the communication partner's side 4.

Optional the telecommunication device 10 may comprise a voice process controller 22 (see Fig. 1b), which can be configured to change automatically the outbound voice signals. In some embodiments the voice process controller 22 may receive the information 12 regarding the intelligibility or an audio quality of the outbound voice signals 6 to be transmitted to a communication partner from the means for determining 14b and/or the outbound voice signals 6. The voice process controller 22 may amplify a frequency component of the outbound voice signals 6 to generate modified outbound voice signals 7, which are then transmitted to the communication partner 4 instead of the outbound voice signals 6. In general the voice process controller may be configured to process the outbound voice signals 6 to generate modified outbound voice signals 7. The modified voice signals 7 may comprise a better intelligibility or audio quality then the unmodified outbound voice signals 6. Therewith the telecommunication quality can be improved compared to the unmodified outbound voice signals 6.

According to some embodiments the outbound voice signals 6 are frequency dependent or spectrally processed by the voice process controller 22. The voice signal processor may perform an outbound voice signal processing. In some embodiments this voice signal processing may be based on the information 12 indicating an intelligibility or audio quality. In further embodiments the voice process controller 22 may be integrated in the telecommunication device 10 at the transmitter side and/or the receiver side. The voice process controller 22 may be coupled between the telecommunication device at the transmitter side and at the receiver side. The voice process controller 22 may control the voice signal processing, for example, by means of filtering certain frequencies of the voice signals 6, amplifying frequency components within the voice signals 6 etc. The voice process controller 22 may also be configured to use the information 12 to improve the outbound voice signals 6. For example, if the information shows a low acoustic quality (low intelligibility or audio quality) of the voice signals 6, the voice process controller 22 may increase the level of higher frequencies in order to improve the intelligibility, since voice signals comprising higher frequencies may be better understood than voice signals comprising lower frequencies.

The voice process controller 22 may be configured to control the processing of the voice signals based on the information in order to improve the quality of the received voice signals or the voice signals to be transmitted. The voice signals may comprise a frequency band of good intelligibility and wherein the controller is configured to amplify a frequency component of the voice signals within the frequency band of good intelligibility. A good intelligibility or audio quality may be given if a predetermined speech intelligibility threshold value is achieved. The voice process controller may be configured to generate the modified voice signals 7 within the frequency band of good intelligibility and audio quality.

The telecommunication device 10 may be, for example, a telephone, a mobile phone, radio equipment, a hands-free phone or videoconference equipment. In general it may be any device that is configured to telecommunicate voice signals to a communication partner.

The input means 2 of the telecommunication device may, for example, be a microphone of a telephone receiver or a mobile phone. A speaker or user may speak into the microphone 2 and the respective voice signals may be transmitted to a communication partner 4 of the speaker. Voice signals 6 may be wirelessly, wired or partly wired and partly wirelessly transmitted. The telecommunication device may be configured to communicate via a wire bonded, a wireless or an internet channel. The voice signals may be transmitted via the internet using the so-called Voice-over-Internet-Protocol (VoIP) technology or other internet telephone technologies. The voice signals may be transmitted with a frequency up to 21.000 Hz, for example, in a frequency range from 300 Hz to 3.400 Hz. The voice signals or the sound may be transmitted from 10 Hz up to 21.000 Hz.

The telecommunication device 10 comprises means for receiving 14a or determining 14b information indicating intelligibility or an audio quality of the outbound voice signals 6. This means that, the telecommunication device 10 is configured to receive or to determine an evaluation result of the intelligibility or the audio quality of the transmitted voice signals at the side of the receiver or listener, i.e. a feedback regarding the intelligibility of the transmitted voice signals or the voice signals to be transmitted is given to the user at the transmitter side. The feedback may be given directly or online to a user of the telecommunication device. The intelligibility or the audio quality may be measured or calculated. The calculation may be based on different speech intelligibility models.

The speech intelligibility can be a subjective quantity, which can be described within different speech intelligibility models. Such a speech intelligibility model can, for example, make use of the so-called articulation index (AI), the speech intelligibility index (SII) or the speech transmission index (STI). Speech intelligibility models can be tailored to special requirements of a user. A person who is hard of hearing may, for example, need a different speech intelligibility model than a person who is normally hearing. The audio quality of the voice signal may be a more objective quantity, which depends among others on the loudness and the frequency spectra of the received voice signals. Speech filter may be used in order to suppress undesirable noise or to gain information about the intelligibility or the audio quality of the outbound voice signals 6.

The output means 15 for presenting the information to a user of the telecommunication device 10 may be, for example, an optical indicator or an acoustic indicator, e.g., a loudspeaker. This means that, if a transmission of a voice signal is unintelligible, the user of the telecommunication device can obtain optical or acoustic information regarding the problem of a bad transmission of the voice signals. The listener does not have to interrupt the conversation in order to ask the speaker to speak louder. If the user of the telecommunication device sees or hears this information which is indicating that the outbound voice signals are transmitted to the communication partner in a bad quality or in an unintelligible way, than he can, for example, speak louder, clearer or slower in order to improve the speech intelligibility or the audio signal quality.

Based on an objective speech intelligibility evaluation a user can directly change the transmission conditions of the voice signals 6 which are transmitted to the listener 4, depending on the information of the intelligibility or audio quality. This may include, for example, such practical things as to shut an open window in order to reduce the environmental noise or to change the amplification of a microphone, which is used as input means.

The information 12 which is indicating the speech intelligibility or the audio quality of the outbound voice signals received by the communication partner or to be transmitted to the communication partner may be presented by means of a loudspeaker or a display to a user of the telecommunication device. The sound signal or the optical signal may depend on a threshold voltage or threshold value of the speech intelligibility. If the speech intelligibility or the audio quality is below the threshold value, an alarm signal can be heard at the user side. The more inferior the speech intelligibility or the audio quality is, the louder the alarm signal could be. The alarm signal may be audible at the transmitter side, for example, in a telephone receiver.

The output means 15 may, for example, be an optical indicator, which indicates the value of the speech intelligibility or audio quality on a scale from 0% to 100%. The optical indicator may indicate the information concerning the intelligibility or the audio quality in different colors depending, for example, on the percentage of the speech intelligibility or audio quality. A green colored optical display scale may, for example, indicate a sufficient audio or intelligibility transmission quality and a red colored optical display scale may indicate an insufficient quality. The degree of intelligibility or audio quality may be displayed in different ways by means of the optical indicator 15. It may be displayed, for example, as a numerical value or as a bar. In a video or telephone conference situation, the output means 15 may, for example, be a display formed as a bar, which is integrated in the telecommunication device, e.g., a video conference system and wherein a speech intelligibility value from 0% up to 100% can be depicted for a user.

In embodiments the optical indicator bar may indicate intelligibility or an audio quality percentage based on the information 12.

In another embodiment the output means 15 may be configured to give a user based on the information 12 an indication for improving the intelligibility or the audio quality of the outbound voice signal 6. Such an indication or suggestion of measures to improve the intelligibility for a user may be, for example, to move closer to the input means 2, to speak louder, to remove environmental noise or to increase an amplification of the input means.

According to another embodiment for a poor acoustic telecommunication between a user and a communication partner an acoustic signal can be brought in, if the speech intelligibility drops below a certain intelligibility threshold value at the transmitter side. The speech intelligibility threshold value may be adjusted manually or automatically by the user or by the communication partner. The speech intelligibility threshold value may depend on the chosen speech intelligibility model.

The voice signals 6 can be analog or digital voice signals. The telecommunication device 10 may be configured to transmit the voice signals in a point-to-point transmission or in a point-to-multipoint transmission, i.e., a speaker or transmitter is connected to different participants of the telecommunication.

In Fig. 1c, a telecommunication device 10 according to another embodiment is shown. In this embodiment the telecommunication device 10 may be configured for a bi-directional telecommunication of voice signals, i.e., for transmitting voice signals 6 to a communication partner 4 and for receiving voice signals 6b from the communication partner 4. In this case the telecommunication device 10 may comprise besides the above described components an audio signal evaluator 8 for evaluating the intelligibility or the audio quality of the voice signals 6 as received by the telecommunication device 10 from the communication partner 4. The audio signal evaluator 8 may be configured to obtain or determine an evaluation result 12b or information of the intelligibility or the audio quality of the voice signals received from the communication partner 4. This evaluation result or information 12b may be provided to the communication partner 4 so that the communication partner receives a feedback of the intelligibility or audio quality of the voice signals at the telecommunication device 10. The audio signal evaluator 8 may be comparable to the means of determining 14b (see Fig.1b), but the audio signal evaluator 8 may be configured to determine an information 12b indicating an intelligibility or an audio quality of the voice signals received from the communication partner 4. In contrast the means of determining 14b information 12 indicating an intelligibility or audio quality may concern information 12 regarding the outbound voice signals 6 to be transmitted to the communication partner 4. In addition in this embodiment, the telecommunication device 10 may comprise means 14a for receiving information 12 indicating intelligibility or audio quality of the outbound voice signals 6 received by the communication partner 4 and output means 15 for presenting this information 12 to a user.

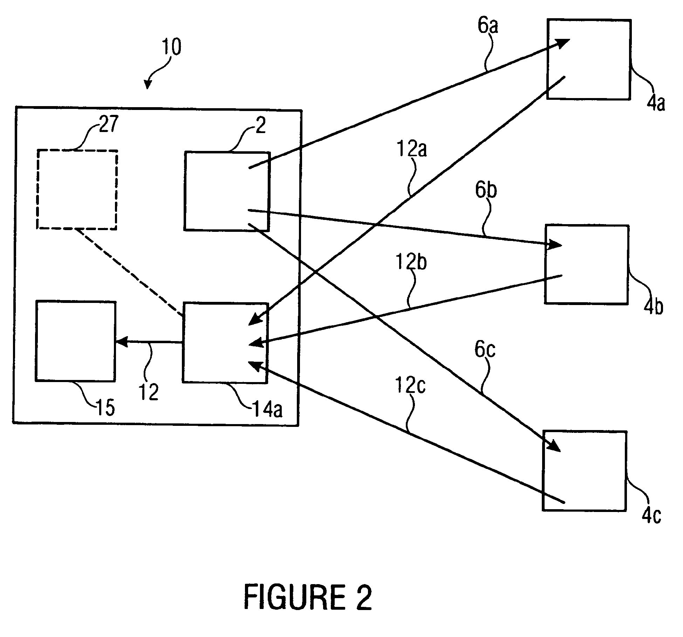

In Fig. 2, a schematic block diagram of a telecommunication device 10 which is connectable to a plurality of communication partners 4a, 4b, 4c is shown. According to this embodiment, the input means 2 of the telecommunication device 10 is configured to transmit the outbound voice signals 6a, 6b and 6c to a plurality of communication partners 4a, 4b and 4c. The means for receiving 14a are configured to indicate a common information 12 that is based on single information 12a, 12b, 12c indicating the intelligibility or the audio quality received from each of the plurality of communication partners 4a, 4b and 4c. According to this embodiment, the means for receiving 14 information, which is indicating the intelligibility or, audio quality of the outbound voice signals at the place of each of the communication partners can be evaluated, weighted or priorized among each other so that the output means 15 presents the common information 12 or the priorized information to an user. The means for receiving information 14 may be configured, for example, to pass information of the poorest speech intelligibility or audio quality to the output means 15. The output means 15 may then present this information of the worst intelligibility or audio quality to a user. The means for receiving 14 information indicating an intelligibility or audio quality may be configured to receive a plurality of information 12a, 12b and 12c from each of the communication partners 4a, 4b and 4c and may be configured to generate based on the plurality of information a common information, which is then provided via the output means 15 to a user. The generation can be performed by means of a certain algorithm, which selects, for example, the information of the most critical telecommunication line with respect to the speech intelligibility or audio quality.

According to another embodiment the telecommunication device 10 comprise means for determining 14b information 12 indicating an intelligibility or audio quality of the outbound voice signals 6a, 6b, 6c to a plurality of communication partners 4a, 4b, 4c. The information 12 regarding the quality of the outbound voice signals may be presented to a user via the output means 15.

In another embodiment, the telecommunication device 10 may comprise a memory 27 or storage, which is configured to store the information indicating the speech intelligibility or the audio quality of the outbound voice signals 6. This stored information may then be analyzed in order to improve the quality of future outbound voice signals 6.

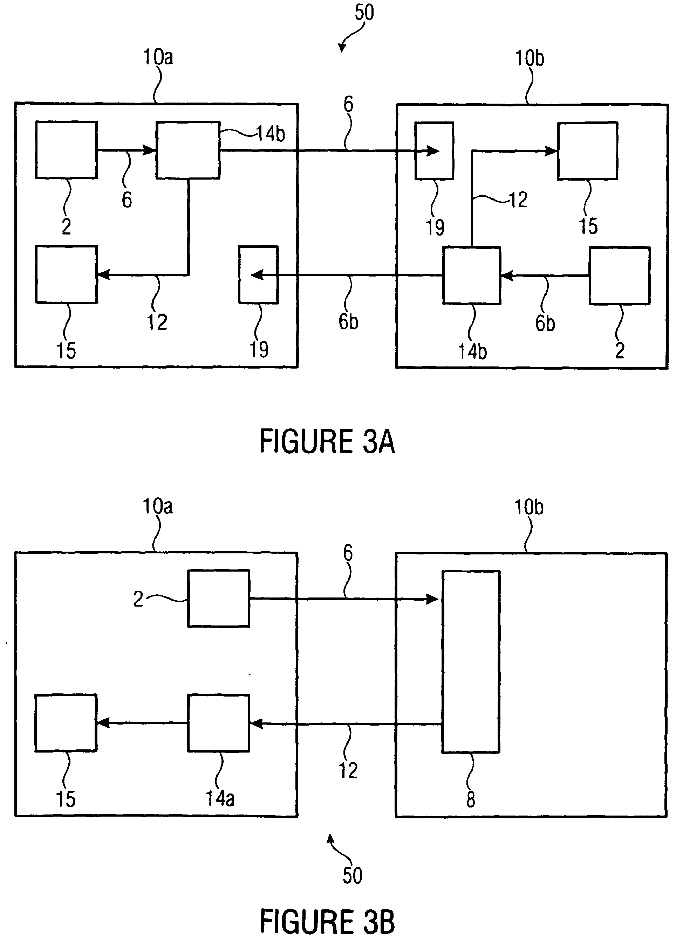

According to some embodiments, a telecommunication device 10 may be configured for a bi-directional or unidirectional telecommunication of voice or audio signals to a communication partner. The telecommunication may be performed using different telecommunication channels. In addition the telecommunication device may comprise voice signal receiver means 19 for receiving voice signals from a communication partner. The telecommunication device may furthermore comprise an audio signal evaluator 8 for evaluating the intelligibility or the audio quality of the voice signals as received by the communication partner to obtain information or an evaluation result concerning the intelligibility or the audio quality. The telecommunication device 10 can be configured to present this evaluation result or information to the communication partner. In other words, a telecommunication device 10 may be configured to transmit voice signals and to receive voice signals, wherein the telecommunication device 10 may comprise an audio signal evaluator for evaluating the quality of the incoming voice signals from a communication partner and for transmitting this information back to the communication partner. It may furthermore comprise means 14a for receiving (see Fig. 3b) information from the communication partner and output means 15 for presenting the information 12 to a user of the telecommunication device 10.

Fig. 3a, shows an embodiment of a telecommunication system 50. The telecommunication system 50 comprises a first telecommunication device 10a as described herein. The telecommunication device 10a may comprise input means 2 for outbound voice signals 6 and means for determining 14b information 12 of an intelligibility or audio quality of the outbound voice signals 6 to be transmitted to a second telecommunication device 10b. As mentioned above, the first telecommunication device 10a comprises furthermore output means 15 for presenting the information 12 to a user of the first telecommunication device 10a.

In addition the telecommunication system 50 comprises at least a second telecommunication device 10b, which may comprise the same components as the first telecommunication device 10a. This means, the second telecommunication device 10b may comprise input means 2 for outbound voice signals 6b and means for determining 14b information 12 of an intelligibility or audio quality of the outbound voice signals 6b which are going to be transmitted to the first telecommunication device 10a.

The second telecommunication device may also comprise output means 15 for presenting the information 12 to a user of the second telecommunication device 10b.

The first 10a and the second 10b telecommunication device may be transceivers which are configured to transmit and receive voice signals 6, 6b from a respective communication partner. For receiving and expressing the voice signals from the communication partner the first and the second telecommunication device may comprise voice signal receiver means 19. Such a voice receiver means may be, for example, a loudspeaker in a telephone receiver.

In further embodiments the first and the second telecommunication device 10a, 10b of the telecommunication system 50 may further comprise a voice process controller 22 as described in context to Fig. 1b. The voice process controller may, for example, be configured to amplify a frequency component of the outbound voice signals at the transmitter side or of the received outbound voice signals at the receiver side to generate a modified outbound voice signal. In general the voice process controller may be configured to process the outbound voice signals.

In Fig. 3b, another telecommunication system 50 is depicted according to an embodiment of the invention. The telecommunication system 50 comprises a first telecommunication device 10a and a second telecommunication device 10b, wherein the first telecommunication device 10a is configured to transmit voice signals 6 to the second telecommunication device 10b. Both, the first and the second telecommunication device may have input means 2 and output means 15. The second telecommunication device 10b may furthermore comprise an audio signal evaluator 8 for evaluating or determining the intelligibility or the audio quality of the voice signals 6, as received by the second telecommunication device 10b, to obtain an evaluation result or information 12. The audio signal evaluator 8 may be integrated in the second telecommunication device 10b or may, alternatively, be coupled, for example, as a standalone device (not shown in Fig. 3b), between the first telecommunication device 10a and the second telecommunication device 10b. The first telecommunication device 10a may be configured to present the evaluation result 12 or the information 12 to a user of the first telecommunication device 10a. The evaluation result 12 may be received by the means of receiving 14a information and may be presented by output means 15 for presenting the evaluation result or the information to a user at the side of the first telecommunication device 10a.

According to some embodiments, the telecommunication system 50 may at least comprise a first telecommunication device 10a, which is configured to outbound voice signals 6 of a user of the first telecommunication device 10a to a second telecommunication device 10b. The transmission of the voice signals 6 may, for example, be performed wirelessly, wirebounded, by a combination of both, via voice-over-internetprotocol telephony or other internet telephony technologies. The transmission channel for the voice signals may be wire bounded, wireless or via internet. The voice signals may be separated in single packages, which are sent from a user of the first telecommunication device 10a to a communication partner at the second telecommunication device 10b by means of an internet telephony technology. The transmission may take place via a satellite, base stations and/or a telephone cable.

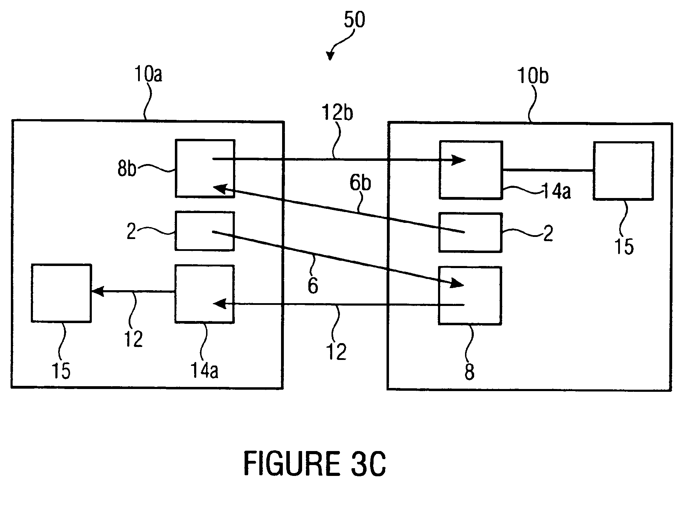

As it is shown in Fig. 3c, a telecommunication system 50 may comprise a first 10a and a second 10b telecommunication device. The first 10a and the second 10b telecommunication device may be transceivers. Hence the second telecommunication device 10b is also configured to transmit voice signals to the first communication device 10a and the first telecommunication device 10b may be configured to receive voice signals from at least one second telecommunication device 10b. In this case, the first telecommunication device 10a may comprise a second audio signal evaluator 8b for evaluating the intelligibility or the audio quality of the voice signals 6b as received by the first communication device 10a from the second telecommunication device 10b to obtain a second evaluation result 12b or a second information, wherein the second telecommunication device 10b is configured to present the second evaluation result 12b or the second information to a user of the second telecommunication device 10b. For receiving information 12, both telecommunication devices 10a, 10b may comprise means for receiving 14a information 12. Furthermore both telecommunication devices comprise input 2 and output means 15 for presenting the information 12 to a user.

Alternatively the first 10a and the second 10b telecommunication device may be transceivers each comprising means for determining 14b information 12 regarding the intelligibility or audio quality of outbound voice signals 6. In this case the information regarding the intelligibility or audio quality of the outbound voice signals is obtained on both transmitter sides and hence the audio signal evaluators 8,8b can be missing.

For the transmission of the signals, one, two, three, four or more channels may be used in order to transmit unidirectional or bi-directional the voice signals and the respective evaluation results between the first communication device 10a and the second communication device 10b.

A voice signal may comprise a speech signal portion and a noise signal portion. An audio signal evaluator 8, 8b or means for determining 14b information indicating an intelligibility or audio quality of outbound voice signals may be configured to analyze the ratio of the speech signal portion of a voice signal to a noise signal portion of the voice signal. Based on this analysis information regarding the speech intelligibility or the audio quality may be provided.

The audio signal evaluator may be a signal processor, which is adapted to calculate or generate an evaluation result, based on the frequency-dependent voice- and noise power.

Based on the evaluation results, the signal processor may control the transmission between the first and the second telecommunication device and vice-versa. The audio signal evaluator or means for determining 14b information indicating an intelligibility or audio quality of outbound voice signals may use a certain algorithm to generate an evaluation result or information of the speech intelligibility or audio quality. The signal processor may, for example, be configured to control the voice signal transmission in such a way that a trade-off between the quality and the speech intelligibility is made. This means, for example, that a good transmission or audio quality may give rise to a flat frequency response. A bad transmission quality or audio quality can cause a frequency response with high speech intelligibility, for example, by an increase of the higher frequencies of the voice signal.

In some embodiments, the audio signal evaluator or means for determining 14b information indicating an intelligibility or audio quality of outbound voice signals may depend on the used speech intelligibility model. The voice signal may be differently evaluated and, hence, different evaluation results may be obtained depending on the used speech intelligibility model. This may then also include different suggestions for a user to change or improve the intelligibility of the voice signals 6.

According to an embodiment, such a speech intelligibility model may be a special model for a person who is hard of hearing. Therefore in this case a threshold value for the speech intelligibility may be higher than a threshold value of speech intelligibility for a person or communication partner who is normally hearing. Since the threshold value for speech intelligibility may be higher, a user on the transmission side, i.e., at the side of the input means 2, can speak louder so that the communication partner, who is hard of hearing, understands well the voice signals at the receiver side.

According to another embodiment, the audio signal evaluator 8, 8b or means for determining 14b information indicating an intelligibility or audio quality of outbound voice signals comprises a voice recognizer or a speech-recognizing engine, which is configured to analyze frequency dependent the phonemes of the voice signals 6 and to assign within a certain confidence limit the phonemes to a possible word. This confidence limit may be the evaluation result or the information 12, which the output means 15 presents to a user. In other words, a voice recognizer at the receiver or transmitter side may present its confidence limit for the recognition of a voice signal as a known word to a user of the telecommunication device 10. An audio signal evaluator 8, 8b or means for determining 14b information indicating an intelligibility or audio quality of outbound voice signals may make use of different speech and noise filters in order to evaluate the voice signals.

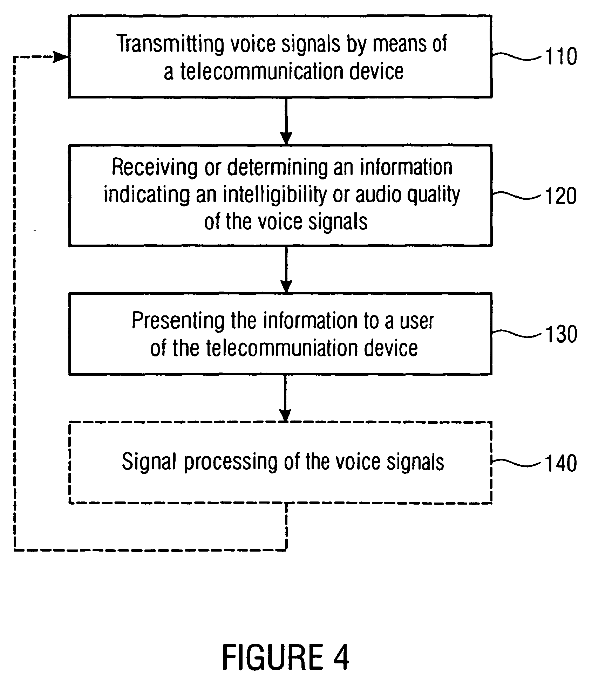

In Fig. 4, a flow chart of an embodiment for the method for telecommunicating voice signals to a communication partner is shown. The method for telecommunicating voice signals to a communication partner may comprise the following steps. Transmitting 110 voice signals with a telecommunication device to a communication partner and receiving 120 or determining 120 an information indicating intelligibility or an audio quality of the outbound voice signals.

The receiving or determining 120 may be performed using the means described above. In general it should be noted that the different steps of the inventive method may be performed as described in context to the description of the embodiments for the telecommunication device 10 and the telecommunication systems 50.

The method furthermore comprises presenting 130 this information concerning the speech intelligibility or the audio quality to a user of the telecommunication device. According to embodiments, the transmission of the voice signal may be performed wired, wirelessly or via voice-over-IP (VoIP) or a combination of these.

According to another embodiment, the method for telecommunicating a voice signal to a communication partner comprises signal processing 140 of the voice signals upon the presentation 130 of the information concerning the intelligibility or audio quality. This means a feedback is given, for example, to a user and based on the feedback a user can manually change the manner as to how the voice signals are transmitted to a communication partner. A user may manually change the transmission, for example, by speaking louder or by increasing the amplifier level of an input microphone, which acts as input means 2. In other embodiments the signal processing 140 may be performed automatically, for example, based on an algorithm and by means of a voice process controller. The signal processing 140 may be performed upon presenting the information of the speech intelligibility or audio quality.

Signal processing 140 of the voice signals may be performed iteratively so that based on the signal processing a new information 12 regarding the intelligibility or audio quality may be received or determined 120 and upon presenting the new information, a further step of signal processing 140 may be performed and so on, until, for example, an information indicating a certain threshold speech intelligibility value is achieved.

In another embodiment, the method may further comprise evaluating 150 the intelligibility or the audio quality of the transmitted voice signals at the receiver and/or at the transmitter side as received by the respective communication partner to obtain an evaluation result or information. This evaluation result or information may be presented 130 to the respective counterpart of the telecommunication.

According to another embodiment the evaluation is done after transmitting 110 a voice signal and receiving 120 the information indicating the intelligibility or the audio quality.

Evaluating 150 may be performed by running a computer program or an algorithm, which is configured to evaluate and/or analyze the transmitted voice signals as described herein and provide information concerning the intelligibility or the evaluation result to output means 15 for presenting the information to a user.

Depending on certain implementation requirements of the inventive methods, the inventive methods or steps of the method can be implemented in hardware or in software. The implementation can be performed using digital storage medium, in particular, a disc, CD or a DVD having an electronically readable control signal stored thereon, which cooperates with a programmable computer system, such that an embodiment of the inventive methods is performed. Generally, an embodiment of the present invention is, therefore, a computer program product with a program code stored on a machine-readable carrier, the program code being operative for performing the inventive methods when the computer program product runs on a computer. In other words, embodiments of the inventive methods are therefore, a computer program having a program code for performing at least one of the inventive methods when a computer program runs on a computer.

According to embodiments, the described telecommunication device or the described telecommunication system has the effect that a transmitter or speaker directly receives a feedback as to how well his speech is understandable for a communication partner. The speaker can online, i.e., directly during the telecommunication try to improve the intelligibility or audio quality of the outbound voice signals, based on the feedback. Therewith the inventive method includes also the possibility to improve a telecommunication quality. Since the speaker or user can directly react to the respective speech intelligibility or audio quality, no cost-intensive directional microphones or environmental microphones or automatic systems for improving the speech intelligibility may be needed, or alternatively, may be used more efficiently. This means that the costs for such a telecommunication device with improved speech intelligibility may be reduced compared to conventional complex telecommunication systems. Furthermore a listener or communication partner does not have to interrupt the communication with a speaker in order to ask him to speak louder or clearer.

In general, the telecommunication device can be used in all communication systems. The telecommunication system may be an acoustic communication system based on the transmission of voice signals. Such a communication system may be, for example, a point-to-point or a point-to-multipoint system. The telecommunication system may be a video conference system, a telephone or a telephone conference system, a mobile phone, a conference speaker systems, as well as, radio equipments or intercom systems.

Furthermore it should be noted that different values may be determined from the voice signals sent to the receiver or received at the receiver. These values describe different characteristics of the respective voice signals. Such values may be, for example, the liveness of a room, the background noise, the articulation of a communication partner, the quality of a telecommunication channel (analog, digital, wireless, etc.), the algorithm for coding and encoding voice signals, the frequency range for the telecommunication, the loudness of the voice signals, the tone of the voice signals or the kind of phonemes or sound forming the voice signals.

One or more of the values may be determined and certain circumstances may be distinguished depending on where in the range of possible values, the values occur. For example, if the value of liveness of a room is determined and if this value is above a certain threshold for the liveness of a room a suggestion for a user of the telecommunication device may be to reduce the distance to a microphone of the telecommunication device. If the background noise during a phone call is determined and the values is above a tolerable threshold value, a user might get the information to reduce the background noise or to get closer to the microphone. These are only simple examples in order to clarify the meaning of the above mentioned terms. It is clear that other values and circumstances exist.

A user might get different suggestions to improve the intelligibility or audio quality of voice signals depending on the determined value. The different possibilities to change or improve the quality of the intelligibility or audio quality of the voice signals may be indicated to a user by the output means 15, so that the user can change manually the intelligibility or audio quality of the voice signals 6. But it is also possible that , for example, a voice process controller 22 may change or improve automatically the quality of the voice signals based on the determined value. The different values to be determined may be implemented in a speech intelligibility model which is used by the means of determining 14b information 12 indicating an intelligibility or audio quality or by the audio signal evaluator 8 at the receiver side.

While this invention has been described in terms of several embodiments, there are alternations, permutations and equivalents, which fall within the scope of this invention. For example, the voice process controller 22 and/or the voice signal receiver 19 can be part of each telecommunication device or telecommunication system according to further embodiments. It should also be noted that there are many alternative ways of implementing the methods and compositions of the present invention.

## Claims

1. A telecommunication device (10) for communicating with a communication partner, comprising:
input means (2) for outbound voice signals (6);
means for receiving (14a) information (12) indicating an intelligibility or audio quality of the outbound voice signals (6) received by the communication partner;
output means (15) for presenting this information (12) to a user; and
a voice process controller (22) which is configured to process based on the information (12) the outbound voice signals (6) to generate modified outbound voice signals (7).

2. The telecommunication device (10) according to claim 1, configured to communicate the outbound voice signals (6) via a wire bounded, a wireless or an internet channel.

3. The telecommunication device (10) according to one of the claims 1 to 2, wherein the output means (15) comprises an optical indicator or an acoustic indicator for presenting the information (12) to a user.

4. The telecommunication device (10) according to one of the claims 1 to 3, wherein the output means (15) is configured to give a user based on the information (12) an indication for improving the intelligibility or the audio quality of the outbound voice signals (6).

5. The telecommunication device (10) according to one of the claims 1 to 4, wherein the input means (2) is configured to transmit the outbound voice signals (6) to a plurality of communication partners (4a, 4b, 4c); and wherein the means for receiving (14a) an information is configured to generate a common information (12) based on the information of the intelligibility or audio qualities of the outbound voice signals received by each of the plurality of communication partners and wherein the output means (15) is configured for presenting the common information to the user.

6. The telecommunication device (10) according to one of the claims 1 to 5, further comprising a memory (27) for storing information indicating the intelligibility or audio quality of the outbound voice signals (6).

7. A telecommunication system (50), with:
a first telecommunication device (10a) comprising:
input means (2) for outbound voice signals (6);
means for receiving (14a) information (12) indicating an intelligibility or audio quality of the outbound voice signals (6) received by a second telecommunication device (10b) and an audio signal evaluator (8) evaluating information (12) indicating an intelligibility or an audio quality of the outbound voice signals (6b) received from the second telecommunication device (10b),
output means (15) for presenting the information (12) to a user of the first telecommunication device (10a); and
the second telecommunication device (10b) comprising:
input means (2) for outbound voice signals (6b);
means for receiving (14a) information (12) indicating an intelligibility or audio quality of the outbound voice signals (6b) received by the first telecommunication device (10a) and an audio signal evaluator (8b) evaluating information (12) indicating an intelligibility or an audio quality of the outbound voice signals received from the first telecommunication device (10a);
output means (15) for presenting the information (12) to a user of the second telecommunication device (10b); and
a voice process controller (22) which is configured to process the outbound voice signals (6, 6b), based on the information (12) of received outbound voice signals (6, 6b) to generate modified outbound voice signals (7).

8. The telecommunication system (50) according to claim 7, wherein the audio signal evaluator (8, 8b) or the means for determining (14b) information (12) indicating an intelligibility or audio quality of the outbound voice signals (6,6b) comprises a voice recognizer configured to analyze the phonemes of the outbound voice signals (6, 6b).

9. The telecommunication system (50) according to one of the claims 7 to 8, wherein the outbound voice signals (6, 6b) comprise a speech signal portion and a noise signal portion, and wherein the audio signal evaluator (8, 8b) or the means for determining (14b) information (12) indicating an intelligibility or audio quality of the outbound voice signals (6, 6b) is configured to obtain based on the ratio of the speech signal portion and the noise signal portion an information (12, 12b).

10. Method for telecommunicating voice signals to a communication partner, comprising:
transmitting (110) voice signals by means of a telecommunication device;
receiving (120) an information indicating an intelligibility or audio quality of the voice signals received by the communication partner;
presenting (130) the information to a user of the telecommunication device; and
signal processing (140) of the voice signals upon the presentation of the information by means of a voice process controller (22) which is configured to process based on the information (12) the voice signals (6) to generate modified voice signals (7).

11. The method according to claim 10, further comprising evaluating (150) the intelligibility or the audio quality of the voice signals at the transmitter or receiver side, to obtain the information indicating the intelligibility or audio quality of the voice signals.

12. A computer program having a program code that, when executed on a computer, performs a method in accordance with one of the claims 10 to 11.

## Patentansprüche

1. Eine Telekommunikationsvorrichtung (10) zum Kommunizieren mit einem Kommunikationspartner, die folgende Merkmale aufweist:
eine Eingangseinrichtung (2) für ausgehende Stimmsignale (6);
eine Einrichtung zum Empfangen (14a) von Informationen (12), die eine Verständlichkeit oder Audioqualität der ausgehenden Stimmsignale (6) anzeigen, die durch den Kommunikationspartner empfangen werden;
eine Ausgangseinrichtung (15) zum Präsentieren dieser Informationen (12) einem Benutzer; und
eine Stimmprozesssteuerung (22), die ausgebildet ist, um basierend auf den Informationen (12) die ausgehenden Stimmsignale (6) zu verarbeiten, um modifizierte, ausgehende Stimmsignale (7) zu erzeugen.

2. Die Telekommunikationsvorrichtung (10) gemäß Anspruch 1, die ausgebildet ist, um die ausgehenden Stimmsignale (6) über einen mit Draht verbundenen, einen drahtlosen oder einen Internet-Kanal zu kommunizieren.

3. Die Telekommunikationsvorrichtung (10) gemäß einem der Ansprüche 1 bis 2, bei der die Ausgangseinrichtung (15) einen optischen Indikator oder einen akustischen Indikator aufweist, um die Informationen (12) einem Benutzer zu präsentieren.

4. Die Telekommunikationsvorrichtung (10) gemäß einem der Ansprüche 1 bis 3, bei der die Ausgangseinrichtung (15) ausgebildet ist, um einem Benutzer, basierend auf den Informationen (12), eine Anzeige zum Verbessern der Verständlichkeit oder der Audioqualität der ausgehenden Stimmsignale (6) zu geben.

5. Die Telekommunikationsvorrichtung (10) gemäß einem der Ansprüche 1 bis 4, bei der die Eingangseinrichtung (2) ausgebildet ist, um die ausgehenden Stimmsignale (6) zu einer Mehrzahl von Kommunikationspartnern (4a, 4b, 4c) zu übertragen; und bei der die Einrichtung zum Empfangen (14a) einer Information ausgebildet ist, um eine gemeinsame Information (12) zu erzeugen, basierend auf den Informationen der Verständlichkeit oder Audioqualitäten der ausgehenden Stimmsignale, die durch jeden der Mehrzahl von Kommunikationspartnern empfangen werden, und bei der die Ausgangseinrichtung (15) ausgebildet ist, um die gemeinsamen Informationen dem Benutzer zu präsentieren.

6. Die Telekommunikationsvorrichtung (10) gemäß einem der Ansprüche 1 bis 5, die ferner einen Speicher (27) aufweist zum Speichern von Informationen, die die Verständlichkeit oder Audioqualität der ausgehenden Stimmsignale (6) anzeigen.

7. Ein Telekommunikationssystem (50), das Folgendes aufweist:
eine erste Telekommunikationsvorrichtung (10a), die folgende Merkmale aufweist:
eine Eingangseinrichtung (2) für ausgehende Stimmsignale (6);
eine Einrichtung zum Empfangen (14a) von Informationen (12), die eine Verständlichkeit oder Audioqualität der ausgehenden Stimmsignale (6) anzeigen, die durch eine zweite Telekommunikationsvorrichtung (10b) empfangen werden und einen Audiosignalbewerter (8), der Informationen (12) bewertet, die eine Verständlichkeit oder eine Audioqualität der ausgehenden Stimmsignale (6b) anzeigen, die von der zweiten Telekommunikationsvorrichtung (10b) empfangen werden;
eine Ausgangseinrichtung (15) zum Präsentieren dieser Informationen (12) einem Benutzer der ersten Telekommunikationsvorrichtung (10a); und
wobei die zweite Telekommunikationsvorrichtung (10b) folgende Merkmale aufweist:
eine Eingangseinrichtung (2) für ausgehende Stimmsignale (6b);
eine Einrichtung zum Empfangen (14a) von Informationen (12), die eine Verständlichkeit oder Audioqualität der ausgehenden Stimmsignale (6b) anzeigen, die durch die erste Telekommunikationsvorrichtung (10a) empfangen werden, und einen Audiosignalbewerter (8b), der Informationen (12) bewertet, die eine Verständlichkeit oder eine Audioqualität der ausgehenden Stimmsignale anzeigen, die von der ersten Telekommunikationsvorrichtung (10a) empfangen werden;
eine Ausgangseinrichtung (15) zum Präsentieren der Informationen (12) einem Benutzer der zweiten Telekommunikationsvorrichtung (10b); und
eine Stimmprozesssteuerung (22), die ausgebildet ist, um die ausgehenden Stimmsignale (6, 6b) zu verarbeiten, basierend auf den Informationen (12) der empfangenen, ausgehenden Stimmsignale (6, 6b), um modifizierte, ausgehende Stimmsignale (7) zu erzeugen.

8. Das Telekommunikationssystem (50) gemäß Anspruch 7, bei dem der Audiosignalbewerter (8, 8b) oder die Einrichtung zum Bestimmen (14b) von Informationen (12), die eine Verständlichkeit oder Audioqualität der ausgehenden Stimmsignale (6, 6b) anzeigen, einen Stimmerkenner aufweisen, der ausgebildet ist, die Phoneme der ausgehenden Stimmsignale (6, 6b) zu analysieren.

9. Das Telekommunikationssystem (50) gemäß einem der Ansprüche 7 bis 8, bei dem die ausgehenden Stimmsignale (6, 6b) einen Sprachsignalabschnitt und einen Rauschsignalabschnitt aufweisen, und bei dem der Audiosignalbewerter (8, 8b) oder die Einrichtung zum Bestimmen (14b) von Informationen (12), die eine Verständlichkeit oder Audioqualität der ausgehenden Stimmsignale (6, 6b) anzeigen, ausgebildet sind, um basierend auf dem Verhältnis des Sprachsignalabschnitts und des Rauschsignalabschnitts eine Information (12, 12b) zu erhalten.

10. Verfahren zum Telekommunizieren von Stimmsignalen zu einem Kommunikationspartner, das folgende Schritte aufweist:
Übertragen (110) von Stimmsignalen mit Hilfe einer Telekommunikationsvorrichtung;
Empfangen (120) einer Information, die eine Verständlichkeit oder Audioqualität der Stimmsignale anzeigt, die durch den Kommunikationspartner empfangen werden;
Präsentieren (130) der Informationen einem Benutzer der Telekommunikationsvorrichtung; und
Signalverarbeitung (140) der Stimmsignale auf die Präsentation der Informationen hin, mit Hilfe einer Stimmprozesssteuerung (22), die ausgebildet ist, um basierend auf den Informationen (12) die Stimmsignale (6) zu verarbeiten, um modifizierte Stimmsignale (7) zu erzeugen.

11. Das Verfahren gemäß Anspruch 10, das ferner das Bewerten (150) der Verständlichkeit oder der Audioqualität der Stimmsignale auf der Sender- oder Empfängerseite aufweist, um die Informationen zu erhalten, die die Verständlichkeit oder Audioqualität der Stimmsignale anzeigen.

12. Ein Computerprogramm mit einem Programmcode, das, wenn es auf einem Computer ausgeführt wird, ein Verfahren gemäß einem der Ansprüche 10 bis 11 ausführt.

## Revendications

1. Dispositif de télécommunication (10) pour communiquer avec un partenaire de communication, comprenant:
un moyen d'entrée (2) pour les signaux vocaux sortants (6);
un moyen pour recevoir (14a) des informations (12) indiquant une intelligibilité ou qualité audio des signaux vocaux sortants (6) reçus par le partenaire de communication;
un moyen de sortie (15) pour présenter ces informations (12) à un utilisateur; et
un contrôleur de traitement de voix (22) qui est configuré pour traiter sur base des informations (12) les signaux vocaux sortants (6), pour générer des signaux vocaux sortants modifiés (7).

2. Dispositif de télécommunication (10) selon la revendication 1, configuré pour communiquer les signaux vocaux sortants (6) via un canal câblé, sans fil ou Internet.

3. Dispositif de télécommunication (10) selon l'une des revendications 1 à 2, dans lequel le moyen de sortie (15) comprend un indicateur optique ou un indicateur acoustique pour présenter les informations (12) à un utilisateur.

4. Dispositif de télécommunication (10) selon l'une des revendications 1 à 3, dans lequel le moyen de sortie (15) est configuré pour donner à un utilisateur, sur base des informations (12), une indication pour améliorer l'intelligibilité ou la qualité audio des signaux vocaux sortants (6).

5. Dispositif de télécommunication (10) selon l'une quelconque des revendications 1 à 4, dans lequel le moyen d'entrée (2) est configuré pour transmettre les signaux vocaux sortants (6) à une pluralité de partenaires de communication (4a, 4b, 4c); et dans lequel le moyen pour recevoir (14a) une information est configuré pour générer une information commune (12) sur base de l'information d'intelligibilité ou de qualités audio des signaux vocaux sortants reçus par chacun de la pluralité de partenaires de communication et dans lequel le moyen de sortie (15) est configuré pour présenter l'information commune à l'utilisateur.

6. Dispositif de télécommunication (10) selon l'une des revendications 1 à 5, comprenant par ailleurs une mémoire (27) destinée à mémoriser l'information indiquant l'intelligibilité ou la qualité audio des signaux vocaux sortants (6).

7. Système de télécommunication (50), avec:
un premier dispositif de télécommunication (10a) comprenant:
un moyen d'entrée (2) pour les signaux vocaux sortants (6);
un moyen pour recevoir (14a) les informations (12) indiquant une intelligibilité ou qualité audio des signaux vocaux sortants (6) reçus par un deuxième dispositif de télécommunication (10b) et un évaluateur de signal audio (8) évaluant les informations (12) indiquant une intelligibilité ou qualité audio des signaux vocaux sortants (6b) reçus du deuxième dispositif de télécommunication (10b),
un moyen de sortie (15) destiné à présenter les informations (12) à un utilisateur du premier dispositif de télécommunication (10a); et
le deuxième dispositif de télécommunication (10b) comprenant:
un moyen d'entrée (2) pour les signaux vocaux sortants (6);
un moyen pour recevoir (14a) les informations (12) indiquant une intelligibilité ou qualité audio des signaux vocaux sortants (6b) reçus par le premier dispositif de télécommunication (10a) et un évaluateur de signal audio (8b) évaluant les informations (12) indiquant une intelligibilité ou une qualité audio des signaux vocaux sortants reçus du premier dispositif de télécommunication (10a);
un moyen de sortie (15) destiné à présenter les informations (12) à un utilisateur du premier dispositif de télécommunication (10b); et
un contrôleur de traitement de voix (22) qui est configuré pour traiter les signaux vocaux sortants (6, 6b), sur base des informations (12) des signaux vocaux sortants reçus (6, 6b), pour générer des signaux vocaux sortants modifiés (7).

8. Système de télécommunication (50) selon la revendication 7, dans lequel l'évaluateur de signal audio (8, 8b) ou le moyen pour déterminer (14b) les informations (12) indiquant une intelligibilité ou qualité audio des signaux vocaux sortants (6, 6b) comprend un moyen de reconnaissance de voix configuré pour analyser les phonèmes des signaux vocaux sortants (6, 6b).

9. Système de télécommunication (50) selon l'une des revendications 7 à 8, dans lequel les signaux vocaux sortants (6, 6b) comprennent une partie de signal vocal et une partie de signal de bruit, et dans lequel l'évaluateur de signal audio (8, 8b) ou le moyen pour déterminer (14b) les informations (12) indiquant une intelligibilité ou qualité audio des signaux vocaux sortants (6, 6b) est configuré pour obtenir, sur base du rapport entre la partie de signal vocal et la partie de signal de bruit, une information (12, 12b).

10. Procédé pour télécommuniquer des signaux vocaux à un partenaire de communication, comprenant le fait de:
transmettre (110) des signaux vocaux au moyen d'un dispositif de télécommunication;
recevoir (120) une information indiquant une intelligibilité ou qualité audio des signaux vocaux reçus par le partenaire de communication;
présenter (130) l'information à un utilisateur du dispositif de télécommunication; et
traiter le signal (140) des signaux vocaux après présentation de l'information au moyen d'un contrôleur de traitement de voix (22) qui est configuré pour traiter, sur base de l'information (12), les signaux vocaux (6), pour générer des signaux vocaux modifiés (7).

11. Procédé selon la revendication 10, comprenant par ailleurs le fait d'évaluer (150) l'intelligibilité ou qualité audio des signaux vocaux du côté de l'émetteur ou du récepteur, pour obtenir les informations indiquant l'intelligibilité ou la qualité audio des signaux vocaux.

12. Programme d'ordinateur ayant un code de programme qui, lorsqu'il est exécuté sur un ordinateur, réalise un procédé selon l'une des revendications 10 à 11.
